# EUROPEAN PATENT APPLICATION

(11) **EP 4 572 272 A1**
(43) Date of publication of application: **18.06.2025**
(21) Application number: 23852444.1
(22) Date of filing: 01.08.2023
(51) Int. Cl.: H04L 27/26, H04W 72/0453

(54) **COMMUNICATION DEVICE AND COMMUNICATION METHOD**

(30) Priority: 08.08.2022 JP 2022126222
(71) Applicant: DENSO CORPORATION, Kariya-city, Aichi 448-8661 (JP)
(72) Inventor: MAEMOTO, Daiki, Kariya- city, Aichi 4488661 (JP)
(74) Representative: TBK
(86) International application number: PCT/JP2023/028152
(87) International publication number: WO 2024/034473

(57) **Abstract**

A communication apparatus (100) comprises a receiver (112) configured to receive, from a base station (210), downlink control information (DCI) or a medium access control element (MAC CE) including transform precoder information indicating whether or not to apply a transform precoder, and a controller (120) configured to determine which one of a first parameter used in a case where the transform precoder is applied and a second parameter used in a case where the transform precoder is not applied is to be used for a parameter configured for a target of the transform precoder information.

## Description

### Cross-Reference to Related Applications

This application is based on and claims the benefit of priority from Japanese Patent Application No. 2022-126222, filed on August 8, 2022, the entire contents of which are incorporated herein by reference.

### Technical Field

The present disclosure relates to a communication apparatus and a communication method used in a mobile communication system.

### Background Art

In the 3rd Generation Partnership Project (hereinafter, referred to as 3GPP) (registered trademark) which is a mobile communication system standardization project, orthogonal frequency division multiplexing (OFDM) using a cyclic prefix (CP) (hereinafter, referred to as "CP-OFDM") or discrete Fourier transform spreading (DFT spreading) OFDM (hereinafter, referred to as "DFT-s-OFDM") can be applied as a waveform of an uplink signal. The DFT-s-OFDM is CP-OFDM to which a feature of performing DFT spreading (hereinafter, referred to as "transform precoder") is applied. Therefore, it is possible to switch which waveform of the DFT-s-OFDM or the CP-OFDM is to be used depending on whether or not the transform precoder is applied.

In Releases 15 and 16 of the 3GPP, whether or not to apply the transform precoder is configured in a communication apparatus by a network (for example, a base station) by using signaling of a radio resource control (RRC) layer (hereinafter, referred to as "RRC signaling"). However, in the case of using the RRC signaling, a processing delay in the communication apparatus increases as compared with the case of using signaling of a layer lower than the RRC layer, and thus, there is a possibility that it is not possible to switch whether or not to apply the transform precoder at an appropriate timing according to a situation.

Therefore, a technology for enabling flexible control of uplink transmission by more dynamically switching a waveform of an uplink signal that has been switched using the RRC signaling has been studied (see, for example, Non Patent Literature 1).

### Citation List

### Non Patent Literature

Non Patent Literature 1: 3GPP Contribution: "RWS-210307"

### Summary of Invention

A communication apparatus according to a first aspect comprises a receiver configured to receive, from a base station (210), downlink control information (DCI) or a medium access control element (MAC CE) including transform precoder information indicating whether or not to apply a transform precoder, and a controller configured to determine which one of a first parameter used in a case where the transform precoder is applied and a second parameter used in a case where the transform precoder is not applied is to be used for a parameter configured for a target of the transform precoder information.

A communication method according to a second aspect is a communication method executed by a communication apparatus. The communication method comprises the steps of receiving, from a base station, downlink control information (DCI) or a medium access control element (MAC CE) including transform precoder information indicating whether or not to apply a transform precoder, and determining which one of a first parameter used in a case where the transform precoder is applied and a second parameter used in a case where the transform precoder is not applied is to be used for a parameter configured for a target of the transform precoder information.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack according to the embodiment.
Fig. 3 is a diagram for describing application of a transform precoder.
Fig. 4 is a diagram illustrating a configuration of a user equipment (UE) according to the embodiment.
Fig. 5 is a diagram illustrating a configuration of a base station according to the embodiment.
Fig. 6 is a sequence diagram for describing an operation example according to the embodiment.

### Description of Embodiments

A mobile communication system according to an embodiment will be described with reference to the drawings. In the description of the drawings, the same or similar parts are denoted by the same or similar reference numerals.

However, in the existing 3GPP technical specification, there is no specific mechanism for dynamically switching a waveform of an uplink signal by using signaling of a layer lower than a radio resource control (RRC) layer. For this reason, there is a concern that a waveform of an uplink signal cannot be appropriately switched and transmitted by using signaling of a layer lower than the RRC layer.

Therefore, an object of the present disclosure is to provide a communication apparatus and a communication method that enable appropriate transmission by dynamically switching a waveform of an uplink signal using signaling of a layer lower than the RRC layer.

### (System Configuration)

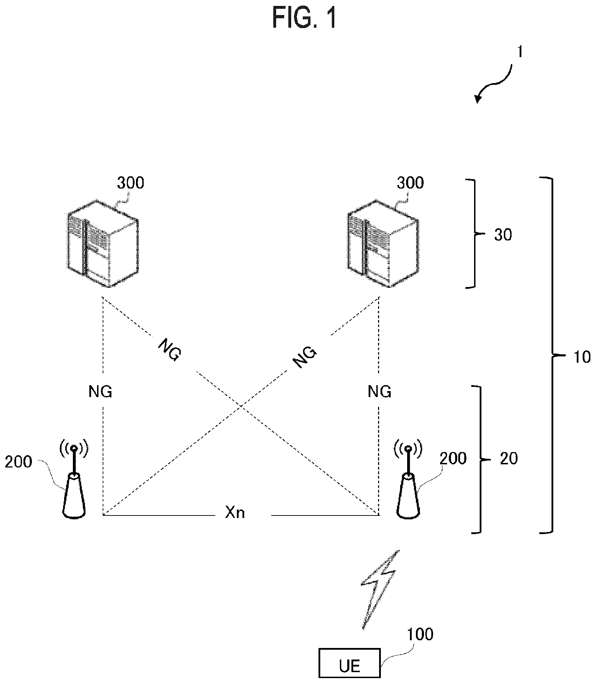

First, a configuration of a mobile communication system 1 according to the present embodiment will be described with reference to Fig. 1. The mobile communication system 1 is, for example, a system conforming to the 3GPP technical specification (TS). Hereinafter, a description will proceed with an example in which the 5th generation system (5G system) of the 3GPP standard, that is, a mobile communication system based on New Radio (NR) is used as the mobile communication system 1.

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.

The UE 100 is a communication apparatus that communicates with a base station 200. The UE 100 may be an apparatus used by a user. The UE 100 is, for example, a mobile apparatus such as a mobile phone terminal such as a smartphone, a tablet terminal, a laptop personal computer (PC), a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. Note that the UE 100 may be referred to as another term such as a terminal, a terminal apparatus, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. In addition, the UE 100 is an example of a terminal, and the terminal may include a factory device or the like.

The NG-RAN 20 includes a plurality of base stations 200. Each of the base stations 200 manages at least one cell. The cell forms a minimum unit of a communication area. One cell belongs to one frequency (carrier frequency). The term "cell" may represent a radio communication resource, and may also represent a communication target of the UE 100. Each base station 200 can perform radio communication with the UE 100 existing in the cell of each base station 200. The base station 200 communicates with the UE 100 by using a protocol stack of a RAN. The details of the protocol stack are described below. Further, the base station 200 is connected to another base station 200 (which may also be referred to as a neighboring base station) via an Xn interface. The base station 200 communicates with the neighboring base station via the Xn interface. In addition, the base station 200 provides NR user plane and control plane protocol terminations towards the UE 100 and is connected to the 5GC 30 via a next generation (NG) interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for U-plane processing. The AMF and the UPF are connected to the base station 200 via the NG interface.

### (Configuration Example of Protocol Stack)

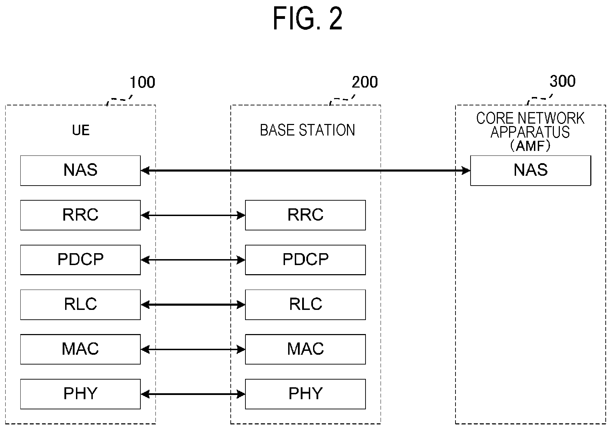

Next, a configuration example of the protocol stack according to the present embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and an RRC layer.

The PHY layer performs coding and decoding, modulation and demodulation, antenna mapping and demapping, and resource mapping and demapping. Data and control information are transmitted between the PHY layer of the UE 100 and the PHY layer of the base station 200 via a physical channel.

The MAC layer performs data priority control, retransmission processing by hybrid ARQ (HARQ), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow which is a unit in which a core network performs quality of service (QoS) control, and a radio bearer which is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case where an RRC connection between the RRC of the UE 100 and the RRC of the base station 200 is suspended, the UE 100 is in an RRC inactive state.

A non-access stratum (NAS) layer located above the RRC layer in the UE 100 performs session management and mobility management of the UE 100. NAS signaling is transmitted between the NAS layer of the UE 100 and the NAS layer of the core network apparatus 300.

Note that the UE 100 has an application layer and the like in addition to a protocol of a radio interface.

### (Radio Frame Configuration)

In the 5G system, downlink transmission and uplink transmission are configured in a radio frame of 10 ms duration. For example, the radio frame includes 10 subframes. For example, one subframe may be 1 ms. Furthermore, one subframe may include one or more slots. For example, the number of symbols included in one slot is 14 for a normal cyclic prefix (CP) and 12 for an extended CP. In addition, the number of slots included in one subframe changes depending on a configured sub-carrier spacing. For example, for the normal CP, when 15 kHz is configured as the sub-carrier spacing, the number of slots per subframe is one (that is, 14 symbols), when 30 kHz is configured as the sub-carrier spacing, the number of slots per subframe is two (that is, 28 symbols), when 60 kHz is configured as the sub-carrier spacing, the number of slots per subframe is four (that is, 56 symbols), and when 120 kHz is configured as the sub-carrier spacing, the number of slots per subframe is eight (that is, 128 symbols). In addition, for the extended CP, when 60 kHz is configured as the sub-carrier spacing, the number of slots per subframe is four (that is, 48 symbols). That is, the number of slots included in one subframe is determined based on the sub-carrier spacing configured by the base station 200. In addition, the number of symbols included in one subframe is determined based on the sub-carrier spacing configured by the base station 200. That is, the number of symbols included in a subframe of 1 ms is determined based on the sub-carrier spacing configured by the base station 200, and a length (a length in a time direction) of each symbol changes.

### (Waveform)

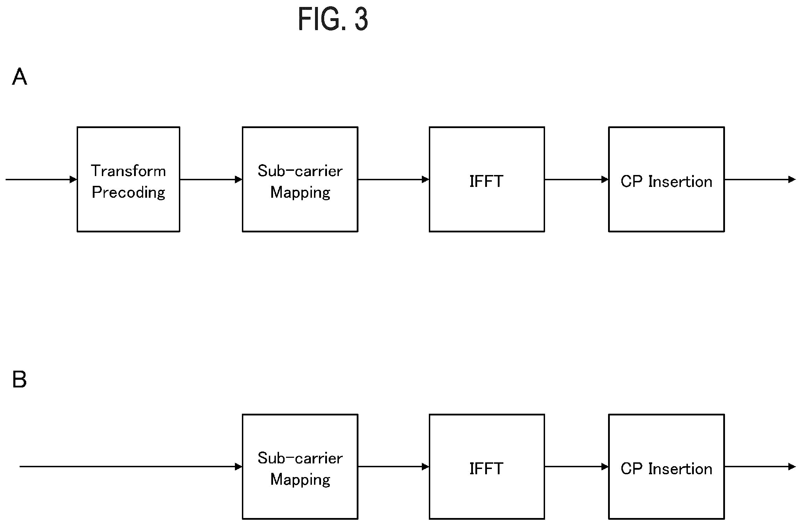

A waveform in the mobile communication system 1 according to the embodiment will be described with reference to Fig. 3. A waveform of a signal transmitted and received in the mobile communication system 1 may be cyclic prefixorthogonal frequency division multiplexing (CP-OFDM) or discrete Fourier transform spread-orthogonal frequency division multiplexing (DFT-s-OFDM). In the mobile communication system 1 based on the 5G system, a downlink transmission waveform may be ODFM using a cyclic prefix (CP). An uplink transmission waveform may be ODFM using a CP together with a transform precoding feature of performing DFT spreading that can be disabled or enabled. In an operation using shared spectrum channel access in frequency range (FR) 1, sub-carrier mapping of the uplink transmission waveform can be performed by mapping to sub-carriers in one or more physical resource block (PRB) interlaces.

For example, either the CP-OFDM or the DFT-s-OFDM may be used for uplink signals such as a physical uplink shared channel (PUSCH) and/or a phasetracking-reference-signal (PTRS). On the other hand, the CP-OFDM may be used for a downlink signal such as a physical downlink shared channel (PDSCH). Furthermore, for example, the CP-OFDM may be used for a signal used for direct communication between the UEs 100, such as a sidelink signal (for example, a physical sidelink shared channel (PSSCH)).

The CP-OFDM, which is a multi-carrier waveform, has an advantage of being resistant to multipath interference, but has a disadvantage of increasing a peak to average power ratio (PAPR). In addition, since the CP-OFDM is a multi-carrier waveform, a transmission data sequence and a reference signal (RS) can be subjected to frequency division multiplexing on different sub-carriers of the same symbol. In addition, since a transmission band of a transmitted signal of the CP-OFDM is not limited to a contiguous frequency band (for example, one or more contiguous physical resource blocks (PRBs)) and may be configured by a discontiguous frequency band (for example, a plurality of discontiguous PRBs), there are few scheduling restrictions as compared with the DFT-s-OFDM. Therefore, for example, in a cell whose load is higher than a designated level, frequency utilization efficiency can be improved by using the CP-OFDM.

Since the DFT-s-OFDM is a single-carrier waveform, the PAPR can be reduced as compared with the CP-OFDM. Therefore, power close to the maximum rated power can be used, and a higher order modulation scheme and/or a higher coding rate can be used. As a result, power consumption of the UE 100 and/or a cost of the UE 100 can be reduced. In addition, it is easy to secure a coverage area. On the other hand, in the DFT-s-OFDM, the transmission data sequence and the RS of a certain UE 100 are subjected to time division multiplexing on different symbols. That is, the transmission data sequence and the RS of a certain UE 100 are different from those of the CP-OFDM without being subjected to frequency division multiplexing on different sub-carriers of the same symbol. In addition, a transmission band of a transmitted signal of the DFT-s-OFDM is limited to a contiguous frequency band (for example, one or more contiguous PRBs).

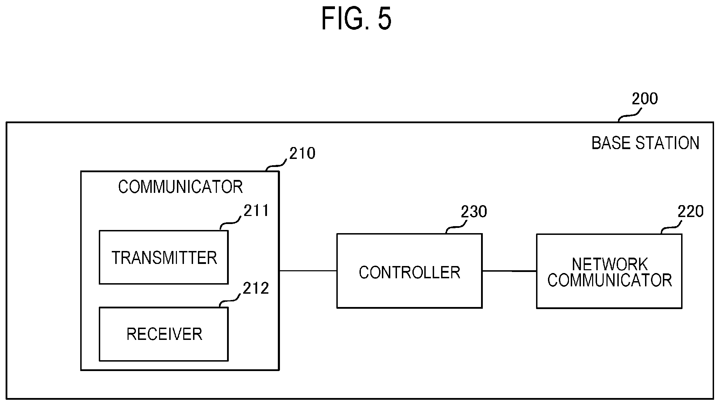

As illustrated in Fig. 3A, the DFT-s-OFDM is different from the CP-OFDM illustrated in Fig. 5(B) illustrated in Fig. 3B in that a transform precoder is included. The DFT-s-OFDM is CP-OFDM to which the transform precoder is applied. The transform precoder may be a feature of performing the DFT spreading. The transform precoder may be paraphrased as transform precoding, DFT precoder, DFT precoding, or the like.

In the DFT-s-OFDM, a coded and modulated transmission data sequence or RS is input to an M-point DFT and converted from the time domain to the frequency domain. An output from the DFT is mapped to M sub-carriers, input to an N-point Inverse Fast Fourier Transform (IFFT), and converted from the frequency domain to the time domain. Note that the DFT may be replaced with a fast Fourier transform (FFT), and the IFFT may be replaced with an inverse discrete Fourier transform (IDFT). N > M, and information input to an unused IFFT is set to zero. N may be equal to the number of sub-carriers corresponding to a designated frequency bandwidth (for example, a bandwidth part (BWP) or a bandwidth of a cell). M may be the number of sub-carriers corresponding to a transmission bandwidth. As a result, an output of the IFFT becomes a signal whose instantaneous power fluctuation is small and whose bandwidth depends on M. The output from the IFFT is subjected to parallel to serial (P/S) conversion, and the CP is added. The CP is also referred to as a guard interval (GI). As described above, in the DFT-s-OFDM, a signal having a single-carrier characteristic is generated and transmitted on one symbol. Note that the CP may be inserted before the P/S conversion for the output from the IFFT.

In the CP-OFDM, a coded and modulated transmission data sequence and/or RS is mapped to a number of sub-carriers equal to the transmission bandwidth and input to the IFFT. The information input to the unused IFFT is set to zero. The output from the IFFT is subjected to the P/S conversion, and the CP is inserted. As described above, since multi-carriers are used in the CP-OFDM, the RS and the transmission data sequence can be subjected to frequency division multiplexing. Note that it is a matter of course that the transmission data sequence may be transmitted without performing frequency division multiplexing with the RS.

As described above, since characteristics of the DFT-s-OFDM and the CP-OFDM are in a trade-off relationship, it is desirable to switch between the DFT-s-OFDM and the CP-OFDM according to various parameters (for example, a cell load, a scheduling situation, and an antenna state). Note that the DFT-s-OFDM and the CP-OFDM are switched depending on whether or not the transform precoder is applied.

In the releases 15 and 16 of the 3GPP, whether or not to apply the transform precoder is configured in the UE 100 by the network 10 (for example, the base station 200) using radio resource control (RRC) layer signaling (hereinafter, referred to as "RRC signaling"). However, in the case of using the RRC signaling, a processing delay in the communication apparatus increases as compared with the case of using signaling of a layer lower than the RRC layer, and thus, there is a possibility that it is not possible to switch whether or not to apply the transform precoder at an appropriate timing according to a situation. Therefore, a technology for enabling flexible control of uplink transmission by more dynamically switching a waveform of an uplink signal that has been switched using the RRC signaling has been studied.

However, in the existing 3GPP technical specification, there is no specific mechanism for dynamically switching a waveform of an uplink signal by using signaling of a layer lower than a radio resource control (RRC) layer. For this reason, there is a concern that a waveform of an uplink signal cannot be appropriately switched and transmitted by using signaling of a layer lower than the RRC layer. In an embodiment described below, an operation for enabling appropriate transmission by dynamically switching a waveform of an uplink signal using signaling of a layer lower than the RRC layer will be described.

For example, in a case where a waveform of an uplink signal is dynamically switched using signaling of a lower layer, a target of an instruction regarding whether or not to apply the transform precoder is not specified. For example, it is not specified which serving cell and/or which uplink bandwidth part (UL BWP) the instruction is to be applied for PUSCH transmission/reception. For this reason, there is a concern that PUSCH transmission and reception cannot be performed between the base station 200 and the UE 100.

Further, there is no specification for application of a parameter related to dynamic transform precoder switching (for example, a radio resource control (RRC) parameter). For example, it is not specified for which parameter configured in the RRC layer the dynamic transform precoder switching is to be applied. For this reason, there is a concern that an uplink signal cannot be appropriately transmitted and received between the base station 200 and the UE 100. In an embodiment described below, an operation for enabling dynamic transform precoder switching using an appropriate parameter will be described.

### (Configuration Information Regarding Transform Precoder)

Configuration information regarding the transform precoder may be, for example, at least one of the following pieces of information. The configuration information may be transmitted from the base station 200 to the UE 100 by using a radio resource control (RRC) message. That is, the base station 200 may transmit the RRC message including the configuration information regarding the transform precoder to the UE 100. Furthermore, the UE 100 may determine whether or not to apply the transform precoder to an uplink signal based on the configuration information included in the RRC message.

First, the configuration information regarding the transform precoder may be configuration information (for example, PUSCH-config) for configuring a communication-apparatus-specific physical uplink shared channel (PUSCH) parameter applicable to a particular bandwidth part (BWP). PUSCH-config is included in information (for example, BWP-UplinkDedicated) used to configure a UE-specific parameter of one uplink BWP. The PUSCH transmission is scheduled using a downlink control information (DCI) format to which a cyclic redundancy check (CRC) (CRC parity bit) scrambled by a cell radio network temporary identifier (C-RNTI) is added (that is, a DCI format used for scheduling the PUSCH).

Whether to enable or disable the transform precoding for the PUSCH transmission is configured in the UE 100 by using transform precoder information (specifically, transformPrecoder) which is a parameter included in PUSCH-Config. The transform precoder information (transformPrecoder) is used for UE-specific selection of the transform precoder for the PUSCH. In a case where a field of the transform precoder information (transformPrecoder) does not exist, the UE 100 applies a value of a field of "msg3-transformPrecoder". Note that "msg3-transformPrecoder" is included in RACH-ConfigCommon.

Second, the configuration information regarding the transform precoder may be configuration information (for example, ConfiguredGrantConfig) for configuring uplink transmission without dynamic grant. ConfiguredGrantConfig may be used to configure uplink transmission without dynamic grant according to two possible schemes. An actual uplink grant may be configured via the RRC or provided via a physical downlink control channel (PDCCH) (addressed to configured scheduling-radio network temporary identifier (CS-RNTI)).

Specifically, two types of transmission without dynamic grant include configured grant (CG) Type 1 PUSCH transmission and CG Type 2 PUSCH transmission. In the CG Type 1 PUSCH transmission, the uplink grant is provided via the RRC. The uplink grant is stored as a configured uplink grant. On the other hand, in the CG Type 2 PUSCH transmission, the uplink grant is provided by the PDCCH. That is, the uplink grant is transmitted on the PDCCH, used for scheduling of the PUSCH, and provided by the DCI format with the CS-RNTI. The uplink grant is stored or cleared as the configured uplink grant based on L1 signaling indicating activation or deactivation of the configured uplink grant. The CG Type 1 PUSCH transmission and the CG Type 2 PUSCH transmission are configured by the RRC for a serving cell for each BWP.

The UE 100 stores the provided uplink grant and considers that the stored uplink grant has been activated at a designated timing. The designated timing may be, for example, a timing according to a cycle and/or an offset configured using the RRC message. The UE 100 performs the PUSCH transmission at the designated timing.

ConfiguredGrantConfig is included in BWP-UplinkDedicated used to configure a UE-specific parameter of one uplink BWP. ConfiguredGrantConfig includes the transform precoder information (specifically, transformPrecoder). Whether to enable or disable the transform precoding for the CG Type 1 PUSCH transmission/CG Type 2 PUSCH transmission is configured in the UE 100 by using the transform precoder information (transformPrecoder) which is a parameter included in ConfiguredGrantConfig. Therefore, the transform precoder information (transformPrecoder) enables or disables the transform precoder for Type 1 and Type 2. In a case where the field of the transform precoder information (transformPrecoder) does not exist, the UE 100 enables or disables the transform precoding according to the field of "msg3-transformPrecoder" in RACH-ConfigCommon described below.

Third, the configuration information regarding the transform precoder may be configuration information (for example, RACH-ConfigCommon) for designating a cell-specific random access (RA) parameter. RACH-ConfigCommon is used to designate the cell-specific RA parameter. RACH-ConfigCommon may be configuration information regarding a random access procedure. RACH-ConfigCommon is included in information (for example, BWP-UplinkCommon) used to configure a cell-specific parameter (that is, a common parameter) of one uplink BWP. RACH-ConfigCommon includes the transform precoder information (msg3-transformPrecoder). msg3-transformPrecoder enables a transform precoder for Msg.3 transmission. In a case where the field of msg3-transformPrecoder does not exist, the UE 100 disables the transform precoder. Therefore, enabling (or disabling) of the transform precoding for the PUSCH transmission for Msg.3 (a UL-SCH of Msg. 3) in the random access procedure is configured in the UE 100 by using the transform precoder information (msg3-transformPrecoder) which is a parameter included in RACH-ConfigCommon.

Note that the Msg.3 PUSCH transmission is scheduled using a random access (RA) response grant or a DCI format to which a CRC scrambled by a temporary C-RNTI (TC-RNTI) is added (that is, the DCI format used for scheduling the PUSCH). The RA response grant is included in Msg.2 (that is, a random access response). The RA response grant is transmitted as a MAC payload for the RA response.

Fourth, the configuration information regarding the transform precoder may be configuration information (for example, MsgA-PUSCH-Config) for designating allocation of a physical uplink shared channel (PUSCH) for message A in a 2-step RA type procedure. MsgA-PUSCH-Config is used to designate the allocation of the PUSCH for the message A in the 2-step RA type procedure. MsgA-PUSCH-Config may be configuration information regarding the random access procedure. MsgA-PUSCH-Config includes the transform precoder information (msgA-TransformPrecoder). msgA-TransformPrecoder enables or disables the transform precoder for MsgA transmission. Enabling and disabling of the transform precoding for the PUSCH transmission for Msg.A (specifically, a UL-SCH of Msg.A) in the random access procedure is configured in the UE 100 by using the transform precoder information (msgA-TransformPrecoder) which is a parameter included in MsgA-PUSCH-Config.

Note that the Msg.A PUSCH transmission is performed on a PUSCH resource configured by a parameter (for example, MsgA-PUSCH-Resource) included in MsgA-PUSCH-Config. MsgA-PUSCH-Resource is included in BWP-UplinkCommon used to configure the cell-specific parameter (common parameter) of one uplink BWP.

### (UE Procedure for Applying Transform Precoding on PUSCH)

A UE procedure for applying the transform precoding on the PUSCH will be described.

The UE 100 may apply enabling/disabling of the transform precoding according to the transform precoder information (specifically, the parameter msg3-transformPrecoder) to the PUSCH transmission scheduled using the uplink grant (that is, the RA response grant) in the random access (RA) response or the PUSCH transmission scheduled using a DCI format 0-0 that is CRC-scrambled using the TC-RNTI.

The UE 100 may apply enabling/disabling of the transform precoding to the Msg.A PUSCH transmission of the RA procedure according to the transform precoder information (specifically, the parameter msgA-TransformPrecoder). In a case where the parameter msgA-TransformPrecoder is not configured, the UE 100 may apply enabling/disabling of the transform precoding to the Msg.A PUSCH transmission according to the parameter msg3-transformPrecoder.

The UE 100 may apply enabling/disabling of the transform precoding to transmission of the PDCCH that is CRC-scrambled using the CS-RNTI, the C-RNTI, or the MCS-C-RNTI with NDI = 1, or the scheduled PUSCH in the following cases (i) and (ii).

(i) In a case where the DCI format 0_0 is received (that is, a case where the PUSCH transmission is scheduled using the DCI format 0_0), the UE 100 may apply enabling/disabling of the transform precoding according to the parameter msg3-transformPrecoder.
(ii) In a case where the DCI format 0_0 is not received (that is, a case where the PUSCH transmission is scheduled using a DCI format 0_1/0_2), (a) when the parameter transformPrecoder included in PUSCH-Config is configured, the UE 100 may apply enabling/disabling of the transform precoding according to transformPrecoder which is the parameter included in pusch-Config. (ii) In a case where the DCI format 0_0 is not received, (b) when the parameter transformPrecoder included in PUSCH-Config is not configured, the UE 100 may apply enabling/disabling of the transform precoding according to the parameter msg3-transformPrecoder.

The UE 100 may apply enabling/disabling of the transform precoding to the PUSCH transmission based on the configured grant in the following cases (i) and (ii). (i) In a case where the parameter transformPrecoder included in ConfiguredGrantConfig is configured, the UE 100 may apply enabling/disabling of the transform precoding according to the parameter transformPrecoder included in ConfiguredGrantConfig. (ii) In a case where the parameter transformPrecoder included in ConfiguredGrantConfig is not configured, the UE 100 may apply enabling/disabling of the transform precoding according to the parameter msg3-transformPrecoder.

As described above, whether or not to apply the transform precoder is switched by the RRC signaling. Note that whether or not to apply the transform precoder may be paraphrased as whether or not to enable the transform precoder, whether or not to activate the transform precoder, or the like.

### (Configuration of UE)

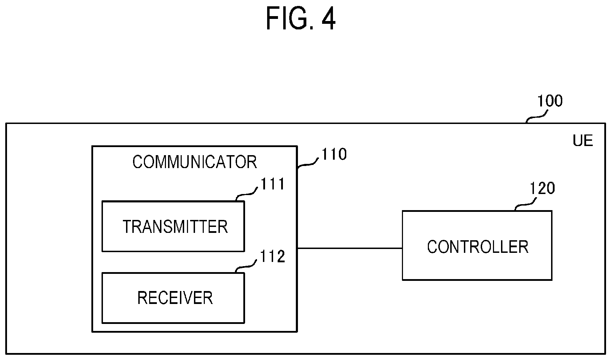

A configuration of the UE 100 according to the embodiment will be described with reference to Fig. 4. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into a space. Further, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation under the control of the controller 120. The controller 120 may include at least one processor capable of executing a program and a memory that stores the program. The processor may execute the program to perform the operation of the controller 120. The controller 120 may include a digital signal processor that performs digital processing of a signal transmitted and received via the antenna and the RF circuit. The digital processing includes processing of the protocol stack of the RAN. Note that the memory stores a program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. The whole or part of the memory may be included in the processor.

In the UE 100 having such a configuration, the receiver 112 receives, from the base station 200, downlink control information (DCI) or a medium access control element (MAC CE) including the transform precoder information indicating whether or not to apply the transform precoder. The controller 120 of the UE 100 determines a target frequency resource that is a target of the transform precoder information. The controller 120 determines whether or not to apply the transform precoder to uplink signal transmission on the target frequency resource based on the transform precoder information. As a result, the UE 100 can dynamically switch and transmit a waveform of an uplink signal on the target frequency resource that is the target of the transform precoder information.

Further, the receiver 112 receives, from the base station 200, the downlink control information (DCI) or the medium access control element (MAC CE) including the transform precoder information indicating whether or not to apply the transform precoder. The controller 120 determines which one of a first parameter used in a case where the transform precoder is applied and a second parameter used in a case where the transform precoder is not applied is to be used for a parameter configured for the target of the transform precoder information. As a result, the UE 100 can switch a parameter related to the application of the transform precoder by determining one of the first parameter and the second parameter for the parameter configured for the target of the transform precoder information included in the DCI or the MAC CE, and can dynamically switch the parameter.

### (Configuration of Base Station)

A configuration of the base station 200 according to the embodiment will be described with reference to Fig. 5. The base station 200 includes a communicator 210, a network communicator 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from the network. The network communicator 220 receives a signal from a neighboring base station connected via the Xn interface which is an interface between base stations, for example, and transmits a signal to the neighboring base station. Further, the network communicator 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Further, the controller 230 controls, for example, communication with a node (for example, the neighboring base station or the core network apparatus 300) via the network communicator 220. The operation of the base station 200 described above and described below may be an operation under the control of the controller 230. The controller 230 may include at least one processor capable of executing a program and a memory that stores the program. The processor may execute the program to perform the operation of the controller 230. The controller 230 may include a digital signal processor that executes digital processing of a signal transmitted and received via the antenna and the RF circuit. The digital processing includes processing of the protocol stack of the RAN. Note that the memory stores a program to be executed by the processor, parameters related to the program, and data related to the program. The whole or part of the memory may be included in the processor.

In the base station 200 configured as described above, the controller 230 determines the target frequency resource that is the target of the transform precoder information indicating whether or not to apply the transform precoder. The transmitter 211 transmits downlink control information (DCI) or a medium access control element (MAC CE) including the transform precoder information to the UE 100. As a result, the UE 100 can dynamically switch and transmit a waveform of an uplink signal on the target frequency resource that is the target of the transform precoder information. The base station 200 can receive an uplink signal whose waveform has been dynamically switched.

### (Operation Example)

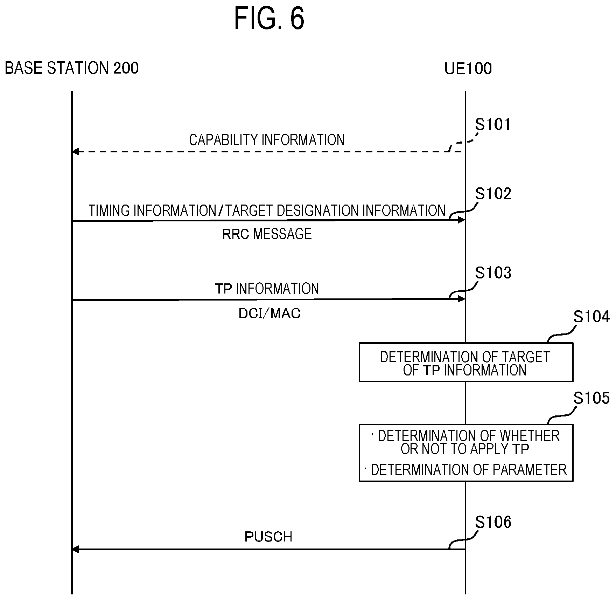

An operation example of the mobile communication system 1 will be described with reference to Fig. 6.

### Step S101:

The transmitter 111 of the UE 100 may transmit, to the base station 200, capability information indicating a capability of the UE 100 used to determine a designated time described below. The receiver 212 of the base station 200 may receive the capability information from the UE 100.

The capability information may be, for example, a radio access capability for determining a time resource (for example, also referred to as a resource in the time domain) for PUSCH transmission based on the transform precoder information (hereinafter, referred to as TP information or first TP information) included in the DCI or the MAC CE. For example, the transmitter 111 of the UE 100 may transmit a UE capability information message (UECapabilityInformation) including the capability information to the base station 200.

The controller 230 of the base station 200 may determine timing information described below based on the capability information transmitted from the UE 100.

### Step S102:

The transmitter 211 of the base station 200 may transmit the RRC message including the timing information for determining a timing (referred to as a designated timing as appropriate) described below to the UE 100. The receiver 112 of the UE 100 may receive the timing information from the base station 200.

As described below, the timing information is information for determining the timing (that is, the designated timing) after a lapse of the designated time from the reception of the TP information included in the DCI or the MAC CE. The timing information may include, for example, information for determining the time resource for PUSCH transmission based on the TP information. The information may indicate a slot, a symbol, and/or a start position on which the PUSCH transmission is performed. For example, the timing information may be used to configure (specify) a relationship between a slot, a symbol, and/or a start position on which the DCI or the MAC CE including the TP information is received and the slot, the symbol, and/or the start position on which the PUSCH transmission is performed. In a case where the DCI or the MAC CE including the TP information is received on a certain slot, a certain symbol, and/or a certain start position, the UE 100 may perform the PUSCH transmission based on the certain slot, the certain symbol, and/or the certain start position, and the timing information.

The timing information may include information indicating a time until the designated timing based on the reception of the PDCCH. The timing information may include information indicating an offset value from a reference value of normal PUSCH transmission, or may include information indicating an offset value from a timing offset from the reference value of normal PUSCH transmission. The timing information may include information indicating a valid duration of the transform precoder information.

The transmitter 211 of the base station 200 may transmit the RRC message including the timing information to the UE 100. The RRC message may include configuration information regarding a configuration of the PUSCH. The configuration information may include the timing information individually applied to the configuration information. The timing information may include information common to a plurality of types of configuration information regarding the PUSCH. The plurality of types of configuration information may include, for example, at least one of PUSCH-config, ConfiguredGrantConfig, RACH-ConfigCommon, and MsgA-PUSCH-Config.

Further, the transmitter 211 of the base station 200 may transmit the RRC message including target designation information designating the target frequency resource described below to the UE 100. The receiver 112 of the UE 100 may receive the target designation information from the base station 200. The frequency resource is also referred to as a resource in the frequency domain.

The target designation information may include information designating a serving cell. The target designation information may include information designating a cell group. The target designation information may include information designating an uplink BWP. That is, the target designation information may include an index of one or more cell groups, an index of one or more serving cells, and/or an index of one or more uplink BWPs. In the present embodiment, designating may be used in the same meaning as configuring.

Further, the transmitter 211 of the base station 200 may transmit the RRC message including both the first parameter and the second parameter to the UE 100. Note that the transmitter 211 of the base station 200 may transmit the first parameter and the second parameter to the UE 100 in separate RRC messages.

The first parameter and/or the second parameter may be a parameter configured for the target of the transform precoder information. The first parameter is used in a case where the transform precoder is applied. The second parameter is used in a case where the transform precoder is not applied. The parameter (that is, the first parameter and/or the second parameter) may be at least one of a parameter related to a sequence of a demodulation reference signal (DMRS) related to the PUSCH, a parameter related to a sequence of the PTRS related to the PUSCH, and a parameter related to determination of a modulation and channel coding scheme (MCS) table.

Hereinafter, for ease of description, the parameter related to the sequence of the DMRS related to the PUSCH, the parameter related to the sequence of the PTRS related to the PUSCH, and/or the parameter related to the determination of the MCS table used in a case where the transform precoder is applied (that is, a case where the transform precoder is enabled) will be referred to as the first parameter. However, it a matter of course that the parameter related to the sequence of the DMRS related to the PUSCH, the parameter related to the sequence of the PTRS related to the PUSCH, and/or the parameter related to the determination of the MCS table used in a case where the transform precoder is applied may be different parameters. For example, the parameter related to the sequence of the DMRS related to the PUSCH used in a case where the transform precoder is applied may be the first parameter. Further, the parameter related to the sequence of the PTRS related to the PUSCH used in a case where the transform precoder is applied may be a third parameter. Further, the parameter related to the determination of the MCS table used in a case where the transform precoder is applied may be a fourth parameter.

Similarly, the parameter related to the sequence of the DMRS related to the PUSCH, the parameter related to the sequence of the PTRS related to the PUSCH, and/or the parameter related to the determination of the MCS table used in a case where the transform precoder is not applied (that is, a case where the transform precoder is disabled) is described as the second parameter. However, it a matter of course that the parameter related to the sequence of the DMRS related to the PUSCH, the parameter related to the sequence of the PTRS related to the PUSCH, and/or the parameter related to the determination of the MCS table used in a case where the transform precoder is not applied may be different parameters. For example, the parameter related to the sequence of the DMRS related to the PUSCH used in a case where the transform precoder is not applied may be the second parameter. Further, the parameter related to the sequence of the PTRS related to the PUSCH used in a case where the transform precoder is not applied may be a fifth parameter. Further, the parameter related to the determination of the MCS table used in a case where the transform precoder is not applied may be a sixth parameter.

### Step S103:

The transmitter 211 of the base station 200 transmits the DCI or the MAC CE including the TP information to the UE 100. The receiver 112 of the UE 100 receives the DCI or the MAC CE including the TP information from the base station 200. The TP information indicates whether or not to apply the transform precoder. For example, the TP information may be information for indicating whether or not to apply the transform precoder to corresponding PUSCH transmission. That is, the TP information may be information for indicating enabling or disabling of the transform precoder. Further, the TP information may include the target designation information.

The transmitter 211 may transmit the DCI including the TP information. Therefore, the transmitter 211 may transmit the TP information by a physical layer (that is, L1 signaling). For example, the transmitter 211 may transmit the DCI including the TP information on the PDCCH. Furthermore, the transmitter 211 may transmit the MAC CE including the TP information on the PDSCH.

The DCI including the TP information may be a DCI format including the TP information. Note that the DCI indicating whether or not to apply the transform precoder may be the TP information. The DCI format including the TP information may be a DCI format used for scheduling of the PDSCH, a DCI format used for scheduling of the PUSCH, and/or a DCI format not used for scheduling of the PDSCH/PUSCH. The CRC parity bit scrambled by the C-RNTI, the CS-RNTI, and/or the MCS-C-RNTI may be added to the DCI format including the TP information.

Further, the DCI including the TP information may be included in a PDCCH order. The PDCCH order may be used to initiate the random access (RA) procedure. The random access procedure initiated (or instructed) by the PDCCH order is also referred to as a contention free random access (CFRA) procedure. For example, a 4-step CFRA procedure or a 2-step CFRA procedure may be initiated by the PDCCH order. In addition, in a case where a CRC of a DCI format 1_0 is scrambled by the C-RNTI and frequency domain resource allocation fields are all "1", the DCI format 1_0 may be for the RA procedure initiated by the PDCCH order.

Here, the DCI format 1_0 (for example, the DCI format 1_0 to which the CRC scrambled by the C-RNTI is added) may be used for scheduling of the PDSCH. That is, in a case where all the values of the frequency domain resource allocation fields included in the DCI format 1_0 are set to "1", the DCI format 1_0 may be identified as a DCI format for the PDCCH order. Further, in a case where any one of the values of the frequency domain resource allocation fields included in the DCI format 1_0 is set to a value other than "1", the DCI format 1_0 may be identified as a DCI format used for scheduling of the PDSCH.

For example, in a case where the DCI format 1_0 is used as the DCI format for the PDCCH order, information indicating a random access preamble may be included in the DCI format 1_0. In the RA procedure initiated by the PDCCH order, the UE 100 may transmit the random access preamble. In addition, in a case where the DCI format 1_0 is used as the DCI format for the PDCCH order, information indicating an index of a syncronization signal and/or physical broadcast channel (SS/PBCH) may be included in the DCI format 1_0. Here, in a case where the DCI format 1_0 is used as the DCI format for the PDCCH order, the TP information (or the DCI including the TP information) may be included in the DCI format 1_0. For example, a spare bit of the DCI format 1_0 for the PDCCH order may be used as the TP information.

Note that the transmitter 211 of the base station 200 may transmit the RRC message including information regarding a field of the TP information (or the DCI including the TP information) to the UE 100. The information may be information indicating the presence or absence of the field of the TP information in the DCI (or the DCI format) and/or information used to determine the number of bits of the field. The controller 120 of the UE 100 may determine (identify) whether or not the TP information is included in the DCI (that is, the presence or absence of the TP information in the DCI) based on the information.

Further, the transmitter 211 of the base station 200 may transmit, to the UE 100, the RRC message including configuration information for monitoring the PDCCH for the DCI (or the DCI format) including the TP information. The configuration information may include information for configuring a control resource set (for example, CORESET(s)) for monitoring the PDCCH for the DCI (or the DCI format) including the TP information and/or information for configuring a search space set(s) for monitoring the PDCCH for the DCI (or the DCI format) including the TP information. The controller 120 of the UE 100 may determine that the DCI received on the configured control resource set and/or search space set includes the TP information. For example, the search space set includes a UE-specific search space set (also referred to as a USS set) and/or a common search space set (also referred to as a CSS set).

The transmitter 211 may transmit the TP information including the MAC CE. Therefore, the transmitter 211 may transmit the TP information in the MAC layer.

The MAC CE including the TP information may be specified. In addition, the MAC CE may include the TP information and a specific logical channel identifier (LCID) for identifying the MAC CE including the TP information. The controller 120 of the UE 100 may determine whether or not the MAC CE includes the TP information based on the specific LCID.

The DCI or the MAC CE may include the target designation information. The MAC CE may include the TP information and the target designation information. The target designation information may include an index of one or more cell groups, an index of one or more serving cells, and/or an index of one or more uplink BWPs.

Note that, in the present specification, the TP information included in the DCI or the MAC CE may be referred to as the first TP information. The TP information included in the RRC message may be referred to as second TP information. Hereinafter, a case where the TP information is the first TP information will be described unless otherwise specified.

### Step S104:

The controller 120 of the UE 100 determines the target of the TP information. The controller 120 determines the target frequency resource that is the target of the TP information. The target frequency resource may be at least one of a cell group, a serving cell, and a bandwidth part (for example, an uplink bandwidth part (UL BWP)). That is, the controller 120 of the UE 100 may determine the cell group, the serving cell, and/or the bandwidth part (for example, the uplink bandwidth part (UL BWP)) to which the TP information is to be applied. Further, the controller 120 of the UE 100 may apply the TP information to uplink signal transmission on the cell group, the serving cell, and/or the bandwidth part (for example, the uplink bandwidth part (UL BWP)).

Furthermore, the controller 120 may determine all the configured serving cells and/or all the uplink BWPs as the target frequency resources. For example, the controller 120 may determine all the serving cells configured for the UE 100 and/or all the uplink BWPs configured for the UE 100 as the target frequency resources. Here, one or more uplink BWPs may be configured in one serving cell. For example, the base station may transmit the RRC message including information for configuring one or more uplink BWPs in each of one or more serving cells.

Furthermore, the controller 120 may determine the target frequency resource based on the target designation information. In a case where the target designation information includes information designating the serving cell, the controller 120 may determine, as the target frequency resource, the designated serving cell among the serving cells configured for the UE 100. In a case where the target designation information includes information designating the cell group, the controller 120 may determine, as the target frequency resource, the designated cell group among the cell groups configured for the UE 100. The cell group may be a master cell group and/or a secondary cell group. In a case where the target designation information includes information designating the uplink BWP, the controller 120 may determine, as the target frequency resource, the designated uplink BWP among the uplink BWPs configured for the UE 100. The controller 120 may apply the TP information to uplink signal transmission on the target frequency resource determined based on the target designation information.

In a case where the DCI is the DCI format including the TP information, the controller 120 may determine, as the target frequency resource, at least one of the serving cell and/or the uplink BWP scheduled using the DCI format. That is, in a case where the DCI format including the TP information is received, the controller 120 may determine, as the target frequency resource, the serving cell and/or the uplink BWP scheduled using the DCI format including the TP information. For example, in a case where the DCI format including the TP information is received, the controller 120 may determine, as the target frequency resource, the serving cell and/or the uplink BWP to which a resource of the PUSCH scheduled using the DCI format including the TP information is allocated. The controller 120 may apply the TP information to uplink signal transmission on the target frequency resource.

Furthermore, in a case where the DCI is the DCI format including the TP information, the controller 120 may determine, as the target frequency resource, an uplink component carrier corresponding to a downlink component carrier on which the DCI format is received and/or an uplink BWP corresponding to a downlink BWP on which the DCI format is received. For example, the controller 120 may determine, as the target frequency resource, an uplink BWP corresponding to a downlink BWP on which the DCI including the TP information is detected (for example, an uplink BWP having the same index as an index of a downlink BWP). That is, in a case where the DCI format including the TP information is received, the controller 120 may determine, as the target frequency resource, a serving cell (uplink serving cell) on which the DCI format including the TP information is detected. As described above, the DCI format including the TP information includes the DCI format for the PDCCH order.

Furthermore, the controller 120 may determine an activated uplink BWP as the target frequency resource.

### Step S105:

The controller 120 of the UE 100 determines whether or not to apply the transform precoder to uplink signal transmission (for example, PUSCH transmission) on the target frequency resource. The controller 120 determines whether or not to apply the transform precoder based on the TP information.

In a case where the TP information indicates that the transform precoder is applied, the controller 120 may determine to apply the transform precoder to uplink signal transmission on the target frequency resource. On the other hand, in a case where the TP information indicates that the transform precoder is not applied, the controller 120 may determine not to apply the transform precoder to uplink signal transmission on the target frequency resource.

In a case where the RRC message including the second TP information is received from the base station 200, the controller 120 may select the TP information to be used for determining whether or not to apply the transform precoder among the first TP information and the second TP information. That is, in a case where the first TP information and the second TP information are received, the controller 120 may determine whether or not to apply the transform precoder based on one of the first TP information and the second TP information. For example, in a case where the first TP information is received, even when the second TP information is configured (regardless of whether or not the second TP information is configured), the controller 120 may determine whether or not to apply the transform precoder based on the first TP information. In a case where the second TP information is configured, even when the first TP information is received (regardless of whether or not the first TP information is received), the controller 120 may determine whether or not to apply the transform precoder based on the second TP information.

The controller 120 may select the first TP information in a case where the second TP information is included in at least one of the configuration information for configuring the communication-apparatus-specific PUSCH parameter applicable to a particular bandwidth part (uplink BWP) and/or the configuration information for configuring the uplink transmission without dynamic grant. That is, in this case, the controller 120 may determine whether or not to apply the transform precoder based on the first TP information. For example, the controller may select the first TP information instead of the second TP information included in PUSCH-config and/or ConfiguredGrantConfig.

In a case where the second TP information is included in the configuration information regarding the random access procedure, the controller 120 may select the second TP information. That is, in this case, the controller 120 may determine whether or not to apply the transform precoder based on the second TP information. The configuration information regarding the random access procedure may be RACH-ConfigCommon and/or MsgA-PUSCH-Config.

That is, the controller 120 may determine whether or not to apply the transform precoder according to the first TP information in a case where whether or not to apply the transform precoder is configured based on the second TP information included in PUSCH-config and/or ConfiguredGrantConfig and whether or not to apply the transform precoder is instructed based on the first TP information. For example, the instruction for the application of the transform precoder based on the first TP information may overwrite configuration for the application of the transform precoder based on the second TP information. Furthermore, in a case where whether or not to apply the transform precoder is configured based on the second TP information included in RACH-ConfigCommon and/or MsgA-PUSCH-Config and whether or not to apply the transform precoder is instructed based on the first TP information, the controller 120 may determine whether or not to apply the transform precoder according to the second TP information. For example, the instruction for the application of the transform precoder based on the first TP information may not overwrite the configuration for the application of the transform precoder based on the second TP information (the configuration for the application of the transform precoder based on the second TP information may be maintained). Here, the controller 120 may select the first TP information instead of the second TP information included in PUSCH-config, ConfiguredGrantConfig, RACH-ConfigCommon, and/or MsgA-PUSCH-Config. That is, the controller 120 may always determine whether or not to apply the transform precoder according to the first TP information in a case where whether or not to apply the transform precoder is configured based on the second TP information included in PUSCH-config, ConfiguredGrantConfig, RACH-ConfigCommon, and/or MsgA-PUSCH-Config, and whether or not to apply the transform precoder is instructed based on the first TP information.

The controller 120 switches whether or not to apply the transform precoder based on the TP information. In a case where the transform precoder is not applied to uplink signal transmission on the target frequency resource, and the controller 120 determines to apply the transform precoder based on the TP information, the controller 120 performs control to switch to use the waveform of the DFT-s-OFDM. On the other hand, in a case where the transform precoder is applied to uplink signal transmission on the target frequency resource, when it is determined not to apply the transform precoder based on the TP information, the controller 120 performs control to switch to use the waveform of the CP-OFDM.

The controller 120 may determine a parameter to be used for uplink signal transmission based on the TP information. Specifically, the controller 120 determines which one of the first parameter used in a case where the transform precoder is applied (that is, a case where the transform precoder is enabled) and the second parameter used in a case where the transform precoder is not applied (that is, a case where the transform precoder is disabled) is to be used for the parameter configured for the target of the transform precoder information. The controller 120 uses the determined parameter as, for example, the parameter related to the sequence of the DMRS related to the PUSCH (or PUSCH transmission), the parameter related to the sequence of the PTRS related to the PUSCH (or PUSCH transmission), and/or the parameter related to the determination of the modulation and channel coding scheme (MCS) table. Here, the parameter related to the determination of the MCS table may include a parameter related to determination of the MCS table related to PUSCH transmission.

The controller 120 may use any one of the first parameter and the second parameter based on whether or not the transform precoder is applied (that is, based on whether the transform precoder is enabled or disabled). For example, in a case where the transform precoder is applied (that is, a case where the transform precoder is enabled), the controller 120 may use the first parameter. Furthermore, in a case where the transform precoder is not applied (that is, a case where the transform precoder is disabled), the controller 120 may use the second parameter. That is, the controller 120 may determine which one of the first parameter and the second parameter is to be used based on the TP information, and generate the sequence of the DMRS related to the PUSCH by using the determined parameter. Further, the controller 120 may determine which one of the first parameter and the second parameter is to be used based on the TP information, and generate the sequence of the PTRS related to the PUSCH by using the determined parameter. Furthermore, the controller 120 may determine which one of the first parameter and the second parameter is to be used based on the TP information, and determine the MCS table by using the determined parameter. Here, the controller 120 may use a parameter (the first parameter or the second parameter) related to a target resource determined as the target of the TP information. For example, in a case where the first parameter and/or the second parameter is configured for each of one or more uplink BWPs, the controller 120 may use the first parameter and/or the second parameter configured for the target resource to which the TP information is applied (that is, the uplink BWP to which the TP information is applied among one or more uplink BWPs).

Here, the controller 120 may suspend (temporarily stop) a parameter that is not used among the first parameter and the second parameter. That is, the controller 120 may suspend one of the first parameter and the second parameter and suspend the other parameter based on whether or not the transform precoder is applied (that is, based on whether the transform precoder is enabled or disabled). For example, in a case where the transform precoder is applied, the controller 120 may use the first parameter and suspend the second parameter. Furthermore, in a case where the transform precoder is not applied, the controller 120 may use the second parameter and suspend the first parameter. Here, the controller 120 may suspend a parameter other than a parameter (the first parameter or the second parameter) related to the target resource determined as the target of the TP information. For example, in a case where the first parameter and/or the second parameter is configured for each of one or more uplink BWPs, the controller 120 may use the first parameter and/or the second parameter configured for the target resource to which the TP information is applied (that is, the uplink BWP to which the TP information is applied among one or more uplink BWPs) and suspend the other parameter (the first parameter and/or the second parameter). Therefore, for example, the controller 120 may consider that a parameter corresponding to the instruction of the TP information (that is, related to the target frequency resource determined as the target of the TP information) among parameters configured using the RRC message is active, and suspend a parameter that does not correspond to the TP information (that is, other than the target of the TP information).

For example, in a case where the controller 120 has an active transform precoder configuration and does not receive an indication that the transform precoder configuration is disabled, it may be considered that the transform precoder configuration is active on an active BWP, and otherwise, it may be considered that the transform precoder configuration is suspended. The transform precoder configuration may correspond to whether or not to apply the transform precoder (that is, enable or disable the transform precoder). The transform precoder configuration may also include any one of the first parameter and the second parameter.

For example, as described above, in a case where enabling of the transform precoder is instructed (configured), the controller 120 may use the first parameter configured for the uplink BWP (that is, an active BWP on which an uplink signal is executed) to which the transform precoder is applied (it may be considered that the first parameter is active). Furthermore, in a case where enabling of the transform precoder is instructed (or configured), the controller 120 does not have to use the second parameter configured for the uplink BWP (that is, an active BWP on which an uplink signal is executed) to which the transform precoder is applied (it may be considered that the second parameter is suspended).

Furthermore, in a case where disabling of the transform precoder is instructed (or configured), the controller 120 does not have to use the first parameter configured for the uplink BWP (that is, an active BWP on which an uplink signal is executed) to which the transform precoder is not applied (it may be considered that the first parameter is suspended). Furthermore, in a case where disabling of the transform precoder is instructed (or configured), the controller 120 may use the second parameter configured for the uplink BWP (that is, an active BWP on which an uplink signal is executed) to which the transform precoder is not applied (it may be considered that the second parameter is active).

### Step S106:

The transmitter 111 of the UE 100 may transmit an uplink signal (for example, the PUSCH) to the base station 200. The receiver 212 of the base station 200 may receive the uplink signal from the UE 100. For example, in a case where the controller 120 determines to apply the transform precoder (that is, a case where the enabling of the transform precoder is instructed (or configured)), the transmitter 111 transmits the uplink signal to which the transform precoder is applied on the target frequency resource. In a case where the controller 120 generates the sequence of the DMRS related to the PUSCH by using the first parameter, the transmitter 111 may transmit the DMRS related to the PUSCH. Here, the transmitter 111 may transmit the DMRS related to the PUSCH on the target frequency resource to which the TP information is applied. In addition, in a case where the controller 120 generates the sequence of the PTRS related to the PUSCH by using the first parameter, the transmitter 111 may transmit the PTRS related to the PUSCH. Here, the transmitter 111 may transmit the PTRS related to the PUSCH on the target frequency resource to which the TP information is applied. In a case where the controller 120 determines the MCS table by using the first parameter, the transmitter 111 may perform transmission on the PUSCH according to the MCS table. Here, the transmitter 111 may perform transmission on the PUSCH according to the MCS table on the target frequency resource to which the TP information is applied.

Furthermore, in a case where the controller 120 determines not to apply the transform precoder, the transmitter 111 transmits the uplink signal to which the transform precoder is not applied on the target frequency resource. In a case where the controller 120 generates the sequence of the DMRS related to the PUSCH by using the second parameter, the transmitter 111 may transmit the DMRS related to the PUSCH. Here, the transmitter 111 may transmit the DMRS related to the PUSCH on the target frequency resource to which the TP information is applied. In addition, in a case where the controller 120 generates the sequence of the PTRS related to the PUSCH by using the second parameter, the transmitter 111 may transmit the PTRS related to the PUSCH. Here, the transmitter 111 may transmit the PTRS related to the PUSCH on the target frequency resource to which the TP information is applied. In a case where the controller 120 determines the MCS table by using the second parameter, the transmitter 111 may perform transmission on the PUSCH according to the MCS table. Here, the transmitter 111 may perform transmission on the PUSCH according to the MCS table on the target frequency resource to which the TP information is applied.

The transmitter 111 may transmit, to the base station 200, the uplink signal to which switching related to the application of the transform precoder is applied, at a timing (designated timing) after a lapse of the designated time from the reception of the transform precoder information (for example, the DCI including the TP information).

The controller 120 may determine the designated timing based on the timing information. For example, the controller 120 may determine, as the designated timing, a timing (for example, a slot after a designated slot on which normal uplink signal transmission is to be performed) later than a normal uplink signal transmission timing (normal offset timing). Furthermore, the controller 120 may determine the designated timing based on the capability information.

Note that the controller 120 may revert determination on whether or not to apply the transform precoder based on the information indicating the valid duration of the TP information. That is, in a case where the valid duration of the TP information has ended, the controller 120 may revert switching of the application of the transform precoder.

Furthermore, the controller 120 may initiate (trigger or perform) the random access procedure based on the reception of the DCI or the MAC CE including the TP information. For example, the controller 120 may initiate a contention free random access (CFRA) procedure and/or a contention based random access (CBRA) procedure based on the reception of the DCI or the MAC CE including the TP information. For example, the controller 120 may initiate the 4-step CFRA procedure and/or the 2-step CFRA procedure based on the reception of the DCI or the MAC CE including the TP information. In addition, a 4-step CBRA procedure and/or a two-step CBRA procedure may be initiated based on the reception of the DCI or the MAC CE including the TP information. As described above, the controller 120 may initiate the CFRA procedure based on the reception of the DCI format for the PDCCH order including the TP information.

Here, the random access procedure may be performed in an upper layer (for example, the MAC layer) in the UE 100. That is, in a case where the DCI including the TP information is received, a lower layer (for example, the physical layer) in the UE 100 may supply (or instruct) the TP information (or the DCI including the TP information) to an upper layer (for example, the MAC layer). Further, the upper layer (for example, the MAC layer) in the UE 100 may initiate the random access procedure based on the supply of the TP information from the physical layer.

The base station 200 may configure (or instruct) the random access preamble used for the random access procedure and a resource (for example, a resource in the frequency domain and/or a resource in the time domain) of a physical random access channel (PRACH). Hereinafter, the resource of the physical random access channel is also referred to as a PRACH occasion(s). For example, the base station 200 may transmit the RRC message including information indicating the random access preamble and/or information indicating the PRACH occasion. For example, the base station 200 may transmit a random access configuration (for example, RACH-ConfigDedicated) including the information indicating the random access preamble and/or the information indicating the PRACH occasion. Furthermore, as described above, the DCI format for the PDCCH order including the information indicating the random access preamble may be transmitted. That is, the base station 200 may configure the random access preamble and/or the PRACH occasion for the random access procedure initiated based on the reception of the TP information.

The UE 100 transmits the random access preamble based on the initiation of the random access procedure (also referred to as message 1 or message A). In addition, the UE 100 may perform transmission on the PUSCH after the transmission of the random access preamble in the 2-step RA procedure. Here, the UE 100 may determine whether or not to apply the transform precoder to the transmission on the PUSCH after the transmission of the random access preamble based on the TP information. For example, the UE 100 may apply the transform precoder based on the TP information to the transmission on the PUSCH after the transmission of the random access preamble. In addition, the UE 100 does not have to apply the transform precoder based on the TP information to the transmission on the PUSCH after the transmission of the random access preamble. The base station 200 may configure the timing information for the transmission on the PUSCH after the transmission of the random access preamble. For example, the base station 200 may transmit the RRC message including the timing information, and the UE 100 may perform the transmission on the PUSCH after the transmission of the random access preamble based on the timing information. That is, the UE 100 may determine a timing (for example, the slot, the symbol, and/or the start position) for the transmission on the PUSCH after the transmission of the random access preamble based on the timing information. For example, the base station 200 may transmit the random access configuration (for example, RACH-ConfigDedicated) including the timing information.

In addition, the UE 100 receives the random access response (RA response) (also referred to as message 2 or message B). For example, the UE 100 may monitor the DCI (or the PDCCH) to which the CRC scrambled by the C-RNTI is added for the reception of the random access response (that is, the reception of the random access response on the PDSCH). Here, the base station 200 may transmit the RRC message including information indicating a time window for monitoring the DC to which the CRC scrambled by the C-RNTI is added (also referred to as ra-ResponseWindow) and/or information indicating the search space set. Here, the search space set includes the USS set and/or the CSS set. That is, the base station 200 may configure the information indicating the time window and/or the search space set for the random access procedure initiated based on the reception of the TP information. For example, the base station 200 may transmit the RRC message including the information indicating the time window and/or the information indicating the search space set, and the UE 100 may monitor the DCI to which the CRC scrambled by the C-RNTI is added on the time window and/or the search space set. The UE 100 may consider that the random access procedure is successfully completed based on the reception (or detection) of the DCI to which the CRC scrambled by the C-RNTI is added.

The UE 100 may also apply the transform precoder according to the TP information based on the successful completion of the random access procedure. In addition, the UE 100 does not have to apply the transform precoder according to the TP information based on the successful completion of the random access procedure. That is, the UE 100 may perform uplink signal transmission according to the TP information based on the successful completion of the random access procedure. Here, the base station 200 may configure the timing information for uplink signal transmission based on the successful completion of the random access procedure. For example, the base station 200 may transmit the RRC message including the timing information, and the UE 100 may transmit an uplink signal according to the TP information based on the timing information after the successful completion of the random access procedure. For example, the UE 100 may transmit an uplink signal according to the TP information after the successful completion of the random access procedure and the timing instructed by the timing information.

In addition, the UE 100 may transmit an uplink signal according to the TP information after processing of a timing advance command. For example, the UE 100 may transmit an uplink signal according to the TP information after the processing of the timing advance command included in the random access response.

In addition, the UE 100 may perform transmission on the PUSCH (or transmission of the UL-SCH) based on the random access response in the 4-step CBRA procedure. For example, the UE 100 may perform transmission on the PUSCH (also referred to as message 3) based on the random access response grant (RA response grant) included in the random access response. For example, the UE 100 may apply the transform precoder based on the TP information to the transmission on the PUSCH. In addition, the UE 100 does not have to apply the transform precoder based on the TP information to the transmission on the PUSCH. The base station 200 may configure the timing information for the transmission on the PUSCH. For example, the base station 200 may transmit the RRC message including the timing information, and the UE 100 may perform the transmission on the PUSCH based on the timing information. That is, the UE 100 may determine the timing ( (for example, the slot, the symbol, and/or the start position)) for the transmission on the PUSCH based on the timing information. For example, the base station 200 may transmit the random access configuration (for example, RACH-ConfigDedicated) including the timing information. Furthermore, the base station 200 may include the timing information in the random access response and transmit the random access response.

In addition, the UE 100 may receive contention resolution (also referred to as message 4) in the 4-step CBRA procedure. For example, the UE 100 may consider that the random access procedure is successfully completed based on the reception (or detection) of the contention resolution. As described above, the UE 100 may apply the transform precoder according to the TP information based on the successful completion of the random access procedure. In addition, the UE 100 does not have to apply the transform precoder according to the TP information based on the successful completion of the random access procedure. That is, the UE 100 may perform uplink signal transmission based on the TP information based on the successful completion of the random access procedure. In addition, the base station 200 may configure the timing information for uplink signal transmission based on the successful completion of the random access procedure. For example, the base station 200 may transmit the RRC message including the timing information, and the UE 100 may transmit an uplink signal based on the timing information after the successful completion of the random access procedure. For example, the UE 100 may transmit an uplink signal after the successful completion of the random access procedure and the timing instructed by the timing information.

As described above, the receiver 112 of the UE 100 receives, from the base station 200, the downlink control information (DCI) or the medium access control element (MAC CE) including the transform precoder information indicating whether or not to apply the transform precoder. The controller 120 of the UE 100 determines a target frequency resource that is a target of the transform precoder information. The controller 120 determines whether or not to apply the transform precoder to uplink signal transmission on the target frequency resource based on the transform precoder information. As a result, the UE 100 can dynamically switch and transmit a waveform of an uplink signal on the target frequency resource that is the target of the transform precoder information. As a result, the UE 100 can dynamically switch and transmit a waveform of an uplink signal on the target frequency resource that is the target of the transform precoder information. The base station 200 can receive an uplink signal whose waveform has been dynamically switched.

In addition, the controller 120 determines all the serving cells configured for the UE 100 or all the uplink BWPs configured for the UE 100 as the target frequency resources. As a result, the UE 100 can commonly recognize the target frequency resource between the base station 200 and the UE 100 even when the target designation information is not exchanged since the configured resource is the target of the TP information.

Furthermore, the receiver 112 may receive the target designation information designating the target frequency resource from the base station 200. The controller 120 may determine the target frequency resource based on the target designation information. As a result, the recognition of the target frequency resource can be shared between the base station 200 and the UE 100.

Further, the target designation information may include the information designating the serving cell as the target frequency resource. The controller 120 may determine, as the target frequency resource, the designated serving cell among the serving cells configured for the UE 100 based on the target designation information. As a result, even in a case where a plurality of serving cells are configured for the UE 100, the serving cell that is the target of the TP information can be flexibly controlled.

The target designation information may include the information designating the cell group as the target frequency resource. The controller 120 may determine, as the target frequency resource, the designated cell group among the cell groups configured for the UE 100 based on the target designation information. Even in a case where a plurality of cell groups are configured for the UE 100, the cell group that is the target of the TP information can be flexibly controlled.

Further, the target designation information may include the information designating the uplink BWP as the target frequency resource. The controller 120 can determine, as the target frequency resource, the designated uplink BWP among the uplink BWPs configured for the UE 100 based on the target designation information. Even in a case where a plurality of uplink BWPs are configured for the UE 100, the uplink BWP that is the target of the TP information can be flexibly controlled.

Further, the receiver 112 may receive the radio resource control (RRC) message including the target designation information from the base station 200. As a result, since the RRC message enables transmission of a larger amount of information than the DCI and the MAC CE, it becomes easy to flexibly designate the target of the TP information.

Further, the receiver 112 may receive the MAC CE including the target designation information from the base station 200. As a result, the target of the TP information can be dynamically switched as compared with the RRC signaling.

Further, the MAC CE may receive the MAC CE including the TP information and the target designation information from the base station 200. As a result, the UE 100 can immediately grasp the target of the TP information.

Further, the DCI may be the DCI format including the TP information. The controller 120 may determine at least one of the serving cell and the uplink BWP scheduled using the DCI format as the target frequency resource. As a result, the UE 100 can grasp the target of the TP information even in a case where the target of the TP information is not explicitly designated.

Further, the DCI may be the DCI format including the TP information. The controller 120 may determine, as the target frequency resource, the uplink component carrier corresponding to the downlink component carrier on which the DCI format is received or the uplink BWP corresponding to the downlink BWP on which the DCI format is received. As a result, the UE 100 can grasp the target of the TP information even in a case where the target of the TP information is not explicitly designated.

Further, the TP information may be the first TP information. The receiver 112 may receive the radio resource control (RRC) message including the second TP information indicating whether or not to apply the transform precoder from the base station. The controller 120 may select the TP information to be used for determining whether or not to apply the transform precoder among the first TP information and the second TP information. As a result, the application of the transform precoder can be flexibly controlled with the first TP information and the second TP information.

Further, the controller 120 may select the first TP information in a case where the second TP information is included in at least one of the configuration information for configuring the communication-apparatus-specific PUSCH parameter applicable to a particular bandwidth part (BWP) and the configuration information for configuring the uplink transmission without dynamic grant. That is, in a case where the communication-apparatus-specific parameter including the second TP information is received (that is, a case where the second TP information is configured as the communication-apparatus-specific parameter), the controller 120 may determine whether or not to apply the transform precoder based on the first TP information. For these pieces of configuration information, the base station 200 can switch whether or not to apply the transform precoder at an appropriate timing by using signaling of a lower layer. In addition, the base station 200 can perform efficient switching of the transform precoder specific to the communication apparatus.

Further, in a case where the second TP information is included in the configuration information regarding the random access procedure, the controller 120 may select the second TP information. That is, in a case where the cell-specific parameter including the second TP information is received (that is, a case where the second TP information is configured as the cell-specific parameter), the controller 120 may determine whether or not to apply the transform precoder based on the second TP information. As a result, the base station 200 can perform optimum switching of the transform precoder in consideration of a situation of the entire cell.

Further, the receiver 112 may receive the radio resource control (RRC) message including the information regarding the field in the DCI including the TP information from the base station 200. As a result, the UE 100 can grasp whether or not the TP information is included in the DCI.

Further, the receiver 112 may receive the radio resource control (RRC) message including the configuration information for monitoring the DCI including the TP information from the base station 200. As a result, the UE 100 can grasp whether or not the TP information is included in the DCI. In addition, the UE 100 can control the control resource set (that is, the resource in the frequency domain) and/or the search space set (that is, the resource in the time domain) for monitoring the DCI including the TP information.

Further, the receiver 112 may receive the MAC CE including the TP information and the specific logical channel identifier for identifying the MAC CE including the TP information from the base station 200. As a result, the UE 100 can grasp whether or not the TP information is included in the MAC CE.

Further, the receiver 112 receives, from the base station 200, the downlink control information (DCI) or the medium access control element (MAC CE) including the transform precoder information indicating whether or not to apply the transform precoder. The controller 120 determines which one of a first parameter used in a case where the transform precoder is applied and a second parameter used in a case where the transform precoder is not applied is to be used for a parameter configured for the target of the transform precoder information. As a result, the UE 100 can switch a parameter related to the application of the transform precoder by determining one of the first parameter and the second parameter for the parameter configured for the target of the transform precoder information included in the DCI or the MAC CE, and can dynamically switch the parameter.

The receiver 112 may receive the RRC message including both the first parameter and the second parameter. As a result, the UE 100 can dynamically switch whether or not to apply the transform precoder by using signaling of a lower layer after the reception of the RRC message.

The controller 120 may suspend a parameter that is not used for uplink signal transmission among the first parameter and the second parameter. As a result, since the parameter is suspended, the controller 120 can use the parameter without delay in a case where the parameter that is not used for uplink signal transmission is switched to be used for uplink signal transmission.

### (Other Embodiments)

In the above embodiment, the PUSCH has been described as an example of an uplink signal whose waveform is determined based on the TPI, but the present disclosure is not limited thereto. A similar operation may be performed for other uplink signals (for example, the PTRS) and other signals (for example, a sidelink signal).

In the above-described embodiment, the mobile communication system based on NR has been described as an example of the mobile communication system 1. However, the mobile communication system 1 is not limited to this example. The mobile communication system 1 may be a system conforming to a TS of long term evolution (LTE) or another generation system (for example, the 6th generation) of the 3GPP standard. The base station 200 may be an eNB that provides E-UTRA user plane and control plane protocol terminations toward the UE 100 in LTE. The mobile communication system 1 may be a system conforming to a TS defined in a standard other than the 3GPP standard. The base station 200 may be an integrated access and backhaul (IAB) donor or an IAB node.

In the above-described embodiment, the mobile communication system based on NR has been described as an example of the mobile communication system 1. However, the mobile communication system 1 is not limited to this example. The mobile communication system 1 may be a system conforming to a TS of LTE or another generation system (for example, the 6th generation) of the 3GPP standard. The base station 200 may be an eNB that provides E-UTRA user plane and control plane protocol terminations toward the UE 100 in LTE. The mobile communication system 1 may be a system conforming to a TS defined in a standard other than the 3GPP standard.

The steps in the operation of the above-described embodiment do not have to necessarily be performed in chronological order according to the order described in the flowchart or sequence diagram. For example, the steps in the operation may be performed in an order different from the order described in the flowchart or the sequence diagram, or may be performed in parallel. In addition, some of the steps in the operation may be removed or additional steps may be added to the processing. Furthermore, each operation flow described above needs not be necessarily implemented separately and independently, and two or more operation flows can be implemented in combination. For example, some steps in one operation flow may be added to other operation flows, or some steps in one operation flow may be replaced with some steps in other operation flows.

A program for causing a computer to perform each processing to be performed by the UE 100 or the base station 200 may be provided. The program may be recorded in a computer-readable medium. By using the computer-readable medium, the program can be installed in the computer. Here, the computer-readable medium in which the program is recorded may be a non-transitory recording medium. The non-transitory recording medium is not particularly limited, and may be, for example, a recording medium such as a compact disk read only memory (CD-ROM) or a digital versatile disc read only memory (DVD-ROM). Furthermore, a circuit that performs each processing to be performed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean performing processing of at least one layer in a protocol stack used for transmission, or may mean physically transmitting a signal in a wireless or wired manner. Alternatively, the term "transmit" may mean a combination of performing processing of at least one layer in a protocol stack used for transmission and physically transmitting a signal in a wireless or wired manner. Similarly, the term "receive" may mean performing processing of at least one layer in a protocol stack used for reception, or may mean physically receiving a signal in a wireless or wired manner. Alternatively, the term "receive" may mean a combination of performing processing of at least one layer in a protocol stack used for reception and physically receiving a signal in a wireless or wired manner. Similarly, the term "obtain/acquire" may mean obtaining/acquiring information from stored information, may mean obtaining/acquiring information from information received from another node, or may mean obtaining/acquiring information by generating the information. Similarly, the term "based on" and "depending on/in response to" do not mean "only based on" or "only depending on/in response to" unless explicitly stated otherwise. The term "based on" means both "only based on" and "at least partially based on". Similarly, the term "depending on/in response to" means both "only depending on/in response to" and "at least partially depending on/in response to". Similarly, the terms "include" and "comprise" do not mean including only enumerated items, but mean both including only enumerated items and including additional items in addition to the enumerated items. Similarly, in the present disclosure, "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. Therefore, references to first and second elements do not mean that only two elements can be employed therein or that the first element should precede the second element in any form. In the present disclosure, when articles such as a, an, and the in English are added by translation, these articles cover the plural meaning unless the context clearly indicates otherwise.

Although the present disclosure has been described in accordance with examples, it is understood that the present disclosure is not limited to the examples or structures. The present disclosure also covers various modified examples or modifications made within an equivalent range. In addition, various combinations and modes, and other combinations and modes including only one element, more elements, or less elements are also within the scope and idea of the present disclosure.

### (Supplementary Notes)

Features related to the above-described embodiments are additionally described.

### [Supplementary Note 1]

A communication apparatus comprising:
a receiver configured to receive, from a base station, downlink control information (DCI) or a medium access control element (MAC CE) including transform precoder information indicating whether or not to apply a transform precoder; and
a controller configured to determine which one of a first parameter used in a case where the transform precoder is applied and a second parameter used in a case where the transform precoder is not applied is to be used for a parameter configured for a target of the transform precoder information.

### [Supplementary Note 2]

The communication apparatus according to supplementary note 1, wherein
the receiver is configured to receive a radio resource control (RRC) message including both the first parameter and the second parameter.

### [Supplementary Note 3]

The communication apparatus according to supplementary note 1 or 2, wherein
the controller is configured to suspend a parameter that is not used for uplink signal transmission among the first parameter and the second parameter.

### [Supplementary Note 4]

The communication apparatus according to any one of supplementary notes 1 to 3, wherein
the controller is configured to determine a target frequency resource that is the target of the transform precoder information and determine, based on the transform precoder information, whether or not to apply the transform precoder to uplink signal transmission on the target frequency resource.

### [Supplementary Note 5]

The communication apparatus according to supplementary note 4, wherein
the controller is configured to determine, as the target frequency resources, all serving cells configured for the communication apparatus or all uplink bandwidth parts (BWP) configured for the communication apparatus.

### [Supplementary Note 6]

The communication apparatus according to supplementary note 4 or 5, wherein
the receiver is configured to receive target designation information designating the target frequency resource from the base station, and
the controller is configured to determine the target frequency resource based on the target designation information.

### [Supplementary Note 7]

The communication apparatus according to supplementary note 6, wherein
the target designation information includes information designating a serving cell as the target frequency resource, and
the controller is configured to determine, as the target frequency resource, the designated serving cell among serving cells configured for the communication apparatus based on the target designation information.

### [Supplementary Note 8]

The communication apparatus according to supplementary note 6 or 7, wherein
the target designation information includes information designating a cell group as the target frequency resource, and
the controller is configured to determine, as the target frequency resource, the designated cell group among cell groups configured for the communication apparatus based on the target designation information.

### [Supplementary Note 9]

The communication apparatus according to any one of supplementary notes 6 to 8, wherein
the target designation information includes information designating an uplink BWP as the target frequency resource, and
the controller is configured to determine, as the target frequency resource, the designated uplink BWP among uplink BWPs configured for the communication apparatus based on the target designation information.

### [Supplementary Note 10]

The communication apparatus according to any one of supplementary notes 6 to 9, wherein
the receiver is configured to receive a radio resource control (RRC) message including the target designation information from the base station.

### [Supplementary Note 11]

The communication apparatus according to any one of supplementary notes 6 to 10, wherein
the receiver is configured to receive the MAC CE including the target designation information from the base station.

### [Supplementary Note 12]

The communication apparatus according to supplementary note 11, wherein
the MAC CE is configured to receive the MAC CE including the transform precoder information and the target designation information from the base station.

### [Supplementary Note 13]

The communication apparatus according to supplementary note 4, wherein
the DCI is a DCI format including the transform precoder information, and
the controller is configured to determine, as the target frequency resource, at least one of a serving cell and an uplink BWP scheduled using the DCI format.

### [Supplementary Note 14]

The communication apparatus according to supplementary note 4, wherein
the DCI is a DCI format including the transform precoder information, and
the controller is configured to determine, as the target frequency resource, an uplink component carrier corresponding to a downlink component carrier on which the DCI format is received or an uplink BWP corresponding to a downlink BWP on which the DCI format is received.

### [Supplementary Note 15]

A communication method executed by a communication apparatus (100), the communication method comprising the steps of:
receiving, from a base station (210), downlink control information (DCI) or a medium access control element (MAC CE) including transform precoder information indicating whether or not to apply a transform precoder; and
determining which one of a first parameter used in a case where the transform precoder is applied and a second parameter used in a case where the transform precoder is not applied is to be used for a parameter configured for a target of the transform precoder information.

## Claims

1. A communication apparatus (100) comprising:
a receiver (112) configured to receive, from a base station (210), downlink control information (DCI) or a medium access control element (MAC CE) including transform precoder information indicating whether or not to apply a transform precoder; and
a controller (120) configured to determine which one of a first parameter used in a case where the transform precoder is applied and a second parameter used in a case where the transform precoder is not applied is to be used for a parameter configured for a target of the transform precoder information.

2. The communication apparatus according to claim 1, wherein the receiver is configured to receive a radio resource control (RRC) message including both the first parameter and the second parameter.

3. The communication apparatus according to claim 1 or 2, wherein the controller is configured to suspend a parameter that is not used for uplink signal transmission among the first parameter and the second parameter.

4. The communication apparatus according to claim 1 or 2, wherein the controller is configured to determine a target frequency resource that is the target of the transform precoder information and determine, based on the transform precoder information, whether or not to apply the transform precoder to uplink signal transmission on the target frequency resource.

5. The communication apparatus according to claim 4, wherein the controller is configured to determine, as the target frequency resources, all serving cells configured for the communication apparatus or all uplink bandwidth parts (BWP) configured for the communication apparatus.

6. The communication apparatus according to claim 4, wherein
the receiver is configured to receive target designation information designating the target frequency resource from the base station, and
the controller is configured to determine the target frequency resource based on the target designation information.

7. The communication apparatus according to claim 6, wherein
the target designation information includes information designating a serving cell as the target frequency resource, and
the controller is configured to determine, as the target frequency resource, the designated serving cell among serving cells configured for the communication apparatus based on the target designation information.

8. The communication apparatus according to claim 6, wherein
the target designation information includes information designating a cell group as the target frequency resource, and
the controller is configured to determine, as the target frequency resource, the designated cell group among cell groups configured for the communication apparatus based on the target designation information.

9. The communication apparatus according to claim 6, wherein
the target designation information includes information designating an uplink BWP as the target frequency resource, and
the controller is configured to determine, as the target frequency resource, the designated uplink BWP among uplink BWPs configured for the communication apparatus based on the target designation information.

10. The communication apparatus according to claim 6, wherein the receiver is configured to receive a radio resource control (RRC) message including the target designation information from the base station.

11. The communication apparatus according to claim 6, wherein the receiver is configured to receive the MAC CE including the target designation information from the base station.

12. The communication apparatus according to claim 11, wherein the MAC CE is configured to receive the MAC CE including the transform precoder information and the target designation information from the base station.

13. The communication apparatus according to claim 4, wherein
the DCI is a DCI format including the transform precoder information, and
the controller is configured to determine, as the target frequency resource, at least one of a serving cell and an uplink BWP scheduled using the DCI format.

14. The communication apparatus according to claim 4, wherein
the DCI is a DCI format including the transform precoder information, and
the controller is configured to determine, as the target frequency resource, an uplink component carrier corresponding to a downlink component carrier on which the DCI format is received or an uplink BWP corresponding to a downlink BWP on which the DCI format is received.

15. A communication method executed by a communication apparatus (100), the communication method comprising the steps of:
receiving, from a base station (210), downlink control information (DCI) or a medium access control element (MAC CE) including transform precoder information indicating whether or not to apply a transform precoder; and
determining which one of a first parameter used in a case where the transform precoder is applied and a second parameter used in a case where the transform precoder is not applied is to be used for a parameter configured for a target of the transform precoder information.
